# EUROPEAN PATENT APPLICATION

(11) **EP 4 832 032 A1**
(43) Date of publication of application: **28.10.2026**
(21) Application number: 24907129.1
(22) Date of filing: 02.12.2024
(51) Int. Cl.: H01G 11/52, H01M 50/411, H01M 50/463

(54) **SEPARATOR FOR ELECTROCHEMICAL ELEMENTS, AND ELECTROCHEMICAL ELEMENT**

(30) Priority: 18.12.2023 JP 2023213086
(71) Applicant: Nippon Kodoshi Corporation, Kochi-shi, Kochi 781-0395 (JP)
(72) Inventor: ICHIMURA, Takumi, Kochi-shi, Kochi 781-0395 (JP); NISHIMORI, Yuhei, Kochi-shi, Kochi 781-0395 (JP); SAKANOUE, Ginga, Kochi-shi, Kochi 781-0395 (JP)
(74) Representative: Betten & Resch
(86) International application number: PCT/JP2024/042521
(87) International publication number: WO 2025/134742

(57) **Abstract**

Provided is a separator for electrochemical elements, which has superior electrolyte impregnation properties compared to prior ones while maintaining characteristics such as low resistance, short circuit resistance and acid resistance. The separator for electrochemical elements is interposed between a pair of electrodes, and can hold an electrolyte solution that contains an electrolyte. The separator is configured as a single-layer separator that is composed of a beaten solvent-spun cellulose fiber and a synthetic fiber. The separator has a thickness of 10 to 70 µm, a density of 0.25 to 0.70 g/cm³, and a Bekk smoothness of 20 to 400 seconds on both surfaces.

## Description

### Technical Field

The present invention relates to a separator for electrochemical elements and an electrochemical element using the separator. The present invention is suitably applied to, for example, an electric double-layer capacitor, a lithium-ion capacitor, and a lithium-ion secondary battery.

### Background Art

In recent years, electrochemical elements, particularly electrochemical elements having characteristics of high capacity such as electric double-layer capacitors, lithium-ion capacitors, and lithium-ion secondary batteries, have been adopted in many fields, including power supplies and backup applications for automotive-related equipment, renewable energy-related equipment such as wind and solar power generation, and communication devices such as smart meters, and applications thereof are expected to continue expanding in the future.

In these electrochemical elements, with the expansion of applications and the improved performance of the equipment in which electrochemical elements are used, there is a demand for reliability capable of withstanding long-term use under severe conditions such as further increases in capacity and higher voltage.

High-capacity electrochemical elements, whose applications have been expanding in recent years, have mainly wound-type or stacked-type structures. The wound-type structure is a structure in which a pair of electrodes are wound with a separator interposed therebetween, impregnated with an electrolyte solution, and then housed in a metal case and sealed. The stacked-type structure is a structure in which electrodes and separators are alternately stacked, housed in a metal case or a laminate film, and then sealed after an electrolyte solution is injected.

The primary role of a separator in an electrochemical element is to isolate a pair of electrodes from each other and to hold an electrolyte solution.

In separators for electrochemical elements in the related art, high denseness is required to minimize short-circuit defects in electrochemical elements. On the other hand, the higher the denseness of the separator, the fewer the pores inside the separator, resulting in reduced electrolyte impregnation properties. This has posed challenges such as decreased productivity, capacity, and reliability of the electrochemical element.

In order to achieve an electrochemical element with excellent productivity, high capacity, and high reliability, there is a demand for a separator with superior electrolyte impregnation properties compared to prior ones, while maintaining characteristics such as low resistance and short-circuit resistance.

As for separators for electrochemical elements, various configurations have been proposed for the purpose of improving characteristics such as short-circuit resistance (see, for example, Patent Literatures 1 to 4).

### Citation List

### Patent Literatures

Patent Literature 1: JP 2000-3834 A
Patent Literature 2: JP 2017-117590 A
Patent Literature 3: JP 2019-96681 A
Patent Literature 4: JP 2013-171905 A

### Summary of Invention

### Technical Problem

In Patent Literature 1, a method for using beaten solvent-spun regenerated cellulose fibers is proposed to improve the denseness of a separator and reduce resistance. The beatable solvent-spun regenerated cellulose fibers are subjected to a beating treatment to yield fine fibrils of less than 1 µm. Therefore, the separator containing the beaten solvent-spun regenerated cellulose fibers has the form of a microporous sheet with high denseness.

However, with an increase in voltage of electrochemical elements in recent years, separators are required to further improve reliability, including chemical stability.

An electrolyte containing a fluorine compound is widely used for an electrolyte solution of an electrochemical element. This electrolyte is decomposed by a trace amount of moisture in the electrochemical element system to generate hydrofluoric acid. Although electrode materials and separators are dried prior to use, complete removal of moisture is difficult. Under high-voltage conditions, a larger amount of hydrofluoric acid is generated than under normal voltage conditions, resulting in increased acidity and raising a concern that the cellulose may decompose.

Patent Literature 2 discloses a technique for enhancing the denseness, mechanical strength, and chemical stability of a separator by unevenly distributing thermoplastic synthetic fibers and regenerated cellulose fibers in the thickness direction of the separator.

By separating the roles such that a part containing a large amount of regenerated cellulose fibers ensures strength and a part containing a large amount of thermoplastic synthetic fibers ensures denseness and acid resistance, both strength and denseness as well as acid resistance are enhanced.

Patent Literature 3 discloses mixing beaten cellulose fibers and thermoplastic synthetic fibers to produce a sheet, adjusting the thickness thereof by soft calendering, and thereby obtaining a separator having a low short-circuit defect rate despite its small thickness.

However, in order to achieve productivity improvement and reliability that can withstand long-term use under severe conditions such as higher capacity, and higher voltage of electrochemical elements, the impregnation properties of the separators in Patent Literature 2 and Patent Literature 3 may not be sufficient.

Patent Literature 4 proposes a separator with improved denseness and mechanical strength by using a multilayer nonwoven fabric composed of two or more nonwoven fabric layers having a high-density layer and a low-density layer.

Patent Literature 4 discloses that a separator having two or more layers containing solvent-spun cellulose and synthetic fibers is subjected to wet-type papermaking and then calendered to reduce interlayer delamination, which was a challenge of conventional multilayer separators; however, a multilayer separator is more difficult to reduce in thickness than a single-layer separator.

The above description has been directed to separators composed of nonwoven fabrics, and synthetic resin microporous membranes are also used as separators for power storage devices such as lithium-ion secondary batteries. Generally, it is a film composed of a polyolefin-based resin and has fine pores.

Such a polyolefin-based resin film has lower electrolyte impregnation properties as compared to a separator composed of nonwoven fabric. Therefore, there are cases where improving productivity or increasing capacity of an electrochemical element is difficult, or initial resistance of an electrochemical element is high because the resistance value of the separator is large.

The present invention has been made in view of the above-mentioned problems, and an object thereof is to provide a separator with superior electrolyte impregnation properties compared to prior ones while maintaining characteristics such as low resistance, short-circuit resistance, and acid resistance for a separator for electrochemical elements.

In addition, an object of the present invention is to provide, by applying the separator, an electrochemical element that has high production capacity and reliability capable of withstanding long-term use under severe conditions, such as higher capacity and higher voltage.

### Solution to Problem

A separator for electrochemical elements of the present invention, the separator being interposed between a pair of electrodes, and capable of holding an electrolyte solution that contains an electrolyte, wherein the separator is configured as a single-layer separator that is composed of a beaten solvent-spun cellulose fiber and a synthetic fiber, and the separator has a thickness of 10 to 70 µm, a density of 0.25 to 0.70 g/cm³, and a Bekk smoothness of 20 to 400 seconds on both surfaces.

Preferably, the air resistance is 2 to 50 seconds.

In addition, the fiber diameter difference between the beaten solvent-spun cellulose fiber and the synthetic fiber is preferably -1.0 µm to 3.0 µm.

Furthermore, the synthetic fiber is preferably one or more fibers selected from a polyester fiber, a polyolefin fiber, and an acrylic fiber.

The electrochemical element of the present invention is configured to use the separator for electrochemical elements of the present invention.

In addition, the electrochemical element of the present invention can be selected from, for example, an electric double-layer capacitor, a lithium-ion capacitor, and a lithium-ion secondary battery.

### Advantageous Effects of Invention

According to the present invention, it is possible to improve electrolyte impregnation properties without impairing the resistance, short-circuit resistance, and acid resistance of the separator.

In addition, by using the separator of the present invention, it is possible to contribute to improvement in the productivity of the electrochemical element and reliability capable of withstanding long-term use under severe conditions, such as higher capacity and higher voltage.

### Description of Embodiments

A separator for electrochemical elements of the present invention is composed of a solvent-spun cellulose fiber and a synthetic fiber.

In a case of using the solvent-spun cellulose fiber, it is possible to achieve a desired fiber diameter or control a desired fibrillation rate by, for example, beating the fiber, which is also preferable from the viewpoints of reducing the resistance and short-circuit resistance of the separator.

In addition, among synthetic fibers, a polyester fiber such as polyethylene terephthalate, a polyolefin fiber such as polyethylene or polypropylene, and an acrylic fiber such as polyacrylonitrile are preferable from the viewpoints of acid resistance, heat resistance, and papermaking suitability.

The separator for electrochemical elements of the present invention can achieve a separator excellent in electrolyte impregnation properties without impairing the resistance and short-circuit resistance of the separator by setting a thickness of 10 to 70 µm, a density of 0.25 to 0.70 g/cm³, and a Bekk smoothness on both surfaces of the separator of 20 to 400 seconds. Furthermore, it is preferable that the air resistance of the separator is 2 to 50 seconds. Furthermore, it is more preferable that the Bekk smoothness on both surfaces of the separator is 30 to 300 seconds and the air resistance is 3 to 30 seconds.

The electrolyte impregnation properties in the electrochemical element primarily involves two aspects: the ability to hold an electrolyte solution and the rate of impregnation.

In this case, there are two portions into which an electrolyte solution is impregnated: a portion where the electrolyte solution permeates into the interior of a separator (hereinafter, referred to as a portion A) and a portion where the electrolyte solution permeates from the interface between an electrode and the separator (hereinafter, referred to as a portion B).

While the portion A has been improved by conventionally defining the material, density, and air resistance constituting the separator, sufficient verification has not been performed for the portion B.

The inventors of the present invention also focused on the portion B and found that impregnation properties of the portion B are influenced by the Bekk smoothness of the separator.

The Bekk smoothness is defined as the time required for air to pass between a glass surface and a separator when the separator is pressed against the glass surface under a predetermined pressure, and is an evaluation method indicating the surface roughness of the separator.

In the present invention, impregnation properties of the portion B are improved by controlling the Bekk smoothness. Note that the lower the value of the Bekk smoothness, the rougher the surface of the sheet.

The Bekk smoothness on both surfaces of the separator of the present invention is 20 to 400 seconds, and more preferably 30 to 300 seconds.

In a case where the Bekk smoothness is more than 400 seconds, the denseness of the separator in the plane direction is significantly high. Therefore, the separator adheres closely to the electrodes during the production of an electrochemical element, and the penetration of an electrolyte solution in the portion B is inhibited, resulting in deterioration of impregnation properties. For example, the separator of Patent Literature 3 falls within this category.

In a case where the Bekk smoothness is less than 20 seconds, the surface of the separator is rough, and the electrolyte impregnation properties in the portion B are improved. However, this results in containing a solvent-spun cellulose with a large fiber diameter and/or a synthetic fiber with a large fineness, and the denseness decreases. In addition, insufficient entanglement among the solvent-spun cellulose fibers results in detachment of the synthetic fibers.

The thickness of the separator of the present invention is 10 to 70 µm.

In a case where the thickness of the separator is less than 10 µm, even with the separator having good denseness, it may not be possible to minimize short-circuit defects of the electrochemical element.

In contrast, in a case where the thickness of the separator is more than 70 µm, the resistance of the separator increases.

The density of the separator of the present invention is 0.25 to 0.70 g/cm³.

In a case where the density of the separator is less than 0.25 g/cm³, the denseness is insufficient, and short-circuit defects may occur.

In contrast, in a case where the density is more than 0.70 g/cm³, fibers constituting the separator are bonded by pressure or fusion, resulting in an increase in the resistance of the separator. Furthermore, since the impregnation properties of the portion A deteriorate, an electrochemical element with high resistance is obtained.

The separator of the present invention uses the beaten solvent-spun cellulose (for example, lyocell) and the synthetic fiber.

The solvent-spun cellulose fiber is refined by beating (mechanical treatment in water), and can maintain low resistance while maximizing the denseness of the separator.

Furthermore, since the synthetic fiber improves the chemical stability of the separator, stability under harsh environments such as higher voltage required for separators in recent years can also be improved.

The content of the solvent-spun cellulose fiber is preferably within a range of 70% to 95% by mass, and the content of the synthetic fiber is preferably within a range of 5% to 30% by mass.

In a case where the content of the solvent-spun cellulose fiber is less than 70% by mass and the content of the synthetic fiber is more than 30% by mass, the entanglement among the solvent-spun cellulose fibers within the sheet is reduced, and detachment of the synthetic fibers from the separator may increase. In a case where the content of the solvent-spun cellulose fiber is more than 95% by mass and the content of the synthetic fiber is less than 5% by mass, the chemical stability of the separator may deteriorate.

The air resistance of the separator of the present invention is 2 to 50 seconds, and more preferably 3 to 30 seconds.

In a case where the air resistance is less than 2 seconds, the denseness is insufficient, and short-circuit defects may occur.

On the other hand, in a case where the air resistance is more than 50 seconds, the resistance of the separator increases, and the electrolyte impregnation properties of the portion A also deteriorate.

The value obtained by subtracting the fiber diameter of the synthetic fibers from the fiber diameter of the solvent-spun cellulose fibers after beating (fiber diameter difference) is preferably within a range of -1.0 µm to 3.0 µm.

In a case where the fiber diameter difference is less than -1.0 µm, fiber entanglement among the solvent-spun cellulose fibers is inhibited, and detachment of the synthetic fibers from the separator may increase.

On the other hand, in a case where the fiber diameter difference is more than 3.0 µm, uneven distribution of fibers occurs as in Patent Literature 2. Accordingly, the Bekk smoothness of a surface having many synthetic fibers increases, and the separator with low electrolyte impregnation properties is obtained.

Hereinafter, specific various examples, comparative examples, and the like of the separator for electrochemical elements and the electrochemical element provided with the separator for electrochemical elements according to the present invention will be described in detail.

Note that, in the following examples, all separators were wet nonwoven fabrics formed by a papermaking method; however, in the present invention, the method for forming the separator is not limited to the papermaking method as long as the thickness, density, and Bekk smoothness of the separator are satisfied. For example, a method of forming a sheet from a fiber dispersion by casting or the like may also be employed without any problem.

### [Evaluation Method for Separator and Electrochemical Element]

Specific measurements and evaluations on characteristics of the separator and the electrochemical element were performed under the following conditions and by the following methods.

### [Fiber Diameter of Solvent-spun Cellulose After Beating]

The raw material after beating or the separator was observed with a scanning electron microscope (SEM), and an average value was obtained when the lengths of only core portions (fibers having a fiber diameter of 1 µm or more) were measured for n = 50.

Note that, for a flat fiber, the part with the longest linear distance is measured.

In a case where it is difficult to distinguish from the synthetic fibers, only the solvent-spun cellulose is taken out and then observed in accordance with JIS L1030-2 'Testing methods for quantitative analysis of fiber mixtures of textiles'.

### [Fiber Diameter of Synthetic Fiber]

The raw material or the separator was observed with an SEM, and an average value was obtained when the lengths were measured for n = 50.

Note that, for a flat fiber, the part with the longest linear distance is measured.

In a case where it is difficult to distinguish from the solvent-spun cellulose, only the synthetic fibers are taken out and then observed in accordance with JIS L1030-2 'Testing methods for quantitative analysis of fiber mixtures of textiles'.

### [Fiber Diameter Difference]

The fiber diameter difference was calculated by subtracting the fiber diameter of the synthetic fibers from the fiber diameter of the solvent-spun cellulose fibers after beating.

### [Thickness]

Using the micrometer specified in "5.1.1 Measuring instruments and measurement methods a Case of using outside micrometer" defined in "JIS C 2300-2 'Cellulosic papers for electrical purposes-Part 2: Methods of test' 5.1 Thickness", the thickness of the separator was measured by the method of folding the paper to form a stack of ten sheets as specified in "5.1.3 Case of measuring thickness by folding paper".

### [Density]

The density of the separator was calculated by measuring the basis weight in a bone dry condition by the method specified in Method B of "JIS C 2300-2 'Cellulosic papers for electrical purposes-Part 2: Methods of test' 7.0A Density".

### [Air Resistance]

The air resistance of the separator was measured using a Type B tester by the method specified in "JIS P 8117 'Paper and board-Determination of air permeance and air resistance (medium range)-Gurley method'".

### [Smoothness of Separator]

The Bekk smoothness of the separator was measured in accordance with "JIS P 8119 'Paper and board-Determination of smoothness by Bekk method'".

Note that, a surface having a large value of Bekk smoothness is referred to as a "smooth surface", and a surface having a small value is referred to as a "rough surface".

### [Method for Producing Electrochemical Element]

A wound electrode assembly was formed by interposing a separator between the two electrode materials and winding the assembly.

Each electrochemical element was obtained by immersing the wound electrode assembly in an electrolyte solution and sealing it in a case. Specifically, electrochemical elements including an electric double-layer capacitor, a lithium-ion capacitor, and a lithium-ion secondary battery were produced by the following methods.

### [Method for Producing Electric Double-layer Capacitor]

An electric double-layer capacitor wound electrode assembly was obtained by winding an activated carbon electrode and a separator. The wound electrode assembly was immersed in an electrolyte solution in which tetraethylammonium tetrafluoroborate was dissolved as an electrolyte, and after vacuum impregnation was performed for 1 hour, the wound electrode assembly was housed in a bottomed cylindrical aluminum case and sealed with a sealing rubber, to produce an electric double-layer capacitor having a rated voltage of 3.0 V and a capacitance of 3000 F.

### [Method for Producing Lithium-Ion Capacitor]

An activated carbon electrode for a lithium-ion capacitor was used as a positive electrode material, and a graphite electrode was used as a negative electrode material. A lithium-ion capacitor element was obtained by alternately folding the separator and electrode materials. The element was housed in a multilayer laminate film together with a lithium pre-doping foil, and an electrolyte solution was injected. After vacuum impregnation was performed for 1 hour, sealing was performed to produce a lithium-ion capacitor having a rated voltage of 4.0 V and a capacitance of 2000 F. As the electrolyte solution, a solution in which lithium hexafluorophosphate was dissolved as an electrolyte in a propylene carbonate solvent was used.

### [Method for Producing Lithium-ion Secondary Battery]

A lithium cobalt oxide electrode for a lithium-ion secondary battery was used as a positive electrode material and a graphite electrode was used as a negative electrode material, which were wound together with the separator to obtain a lithium-ion secondary battery wound electrode assembly. The wound electrode assembly was immersed in an electrolyte solution in which lithium hexafluorophosphate was dissolved as an electrolyte in a mixed solvent of ethylene carbonate and diethyl carbonate, and was subjected to vacuum impregnation for 1 hour, followed by housing the wound electrode assembly in a bottomed cylindrical case and sealing it by a press machine, to produce a lithium-ion secondary battery having a rated voltage of 4.2 V and a discharge capacity of 3000 mAh.

The characteristics of each produced electrochemical element were measured by the following methods. Note that, 1000 pieces of each example for each electrochemical element were produced and used for the following characteristic evaluations.

### [Impregnation Properties]

The capacitance or discharge capacity of the produced electrochemical element was measured to evaluate the impregnation properties.

The capacitance or discharge capacity of each electrochemical element was evaluated as "○" for 99% or more, "△" for 95% or more and less than 99%, and "×" for less than 95%.

### [Capacitance and Discharge Capacity]

The electrostatic capacities of the electric double-layer capacitor and the lithium-ion capacitor were determined by the constant current discharge method of "5.5 Capacitance and internal resistance measurement method 1" specified in "JIS C 5160-1 'Fixed electric double-layer capacitors for use in electric and electronic equipment-Part 1: Generic specification'".

The discharge capacity of the lithium-ion secondary battery was measured in accordance with "6.3 Discharge performance" specified in "JIS C 8715-1 'Secondary lithium cells and batteries for use in industrial applications-Part 1: Performance requirements'".

### [Internal Resistance]

The internal resistances of the electric double-layer capacitor and the lithium-ion capacitor were determined by the constant current discharge method of "5.5 Capacitance and internal resistance measurement method 1" specified in "JIS C 5160-1 'Fixed electric double-layer capacitors for use in electric and electronic equipment-Part 1: Generic specification'".

The internal resistance of the lithium-ion secondary battery was measured in accordance with "6.5 Internal resistance" specified in "JIS C 8715-1 'Secondary lithium cells and batteries for use in industrial applications-Part 1: Performance requirements'".

### [Short Circuit Defect Rate]

The short-circuit defect rate of the electrochemical element was determined by defining cases where the charging voltage did not rise to the rated voltage as a short-circuit defect, dividing the number of electrochemical elements with such short-circuit defects by the number of produced electrochemical elements, and expressing the result as a percentage.

### [Capacity Retention Rate]

A long-term reliability test in which the rated voltage was applied to the electrochemical element for 1500 hours under a constant condition of 65°C was conducted. Note that, in the long-term reliability test, the electrochemical elements with short-circuit defects were excluded. The capacity retention rate of the electrochemical element was determined using the following Equation (1). 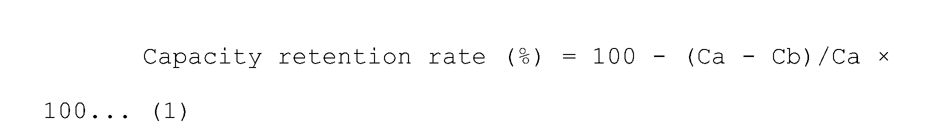 Capacity retention rate (%) = 100 - (Ca - Cb)/Ca × 100 (1) (Ca: Capacity before long-term reliability test, Cb: Capacity before long-term reliability test)

### Examples

Hereinafter, specific various examples, comparative examples, and conventional examples of the separator for electrochemical elements according to the present invention and the electrochemical element provided with the separator for electrochemical elements will be described.

The separator of each example was obtained by a papermaking method using a papermaking machine.

### (Example 1)

As beaten solvent-spun cellulose fibers, 95% by mass of lyocell fibers having an average fiber diameter of 2.1 µm and as synthetic fibers, 5% by mass of polyethylene terephthalate fibers (hereinafter, referred to as PET fibers) having an average fiber diameter of 3.0 µm were mixed and subjected to Fourdrinier papermaking, to obtain a separator having a thickness of 10.3 µm and a density of 0.69 g/cm³.

The fiber diameter difference between the lyocell fibers and the PET fibers of this separator was -0.9 µm. In addition, the Bekk smoothness was 397.1 seconds for the smooth surface and 395.0 seconds for the rough surface, and the air resistance was 49.6 seconds/100 ml.

Using this separator, each electrochemical element of Example 1 was produced.

### (Example 2)

As beaten solvent-spun cellulose fibers, 95% by mass of lyocell fibers having an average fiber diameter of 3.0 µm, and as synthetic fibers, 5% by mass of PET fibers having an average fiber diameter of 2.2 µm were mixed and subjected to Fourdrinier papermaking, to obtain a separator having a thickness of 15.0 µm and a density of 0.64 g/cm³.

The fiber diameter difference between the lyocell fibers and the PET fibers of this separator was 0.8 µm. In addition, the Bekk smoothness was 298.2 seconds for the smooth surface and 286.3 seconds for the rough surface, and the air resistance was 30.0 seconds/100 ml.

Using this separator, each electrochemical element of Example 2 was produced.

### (Example 3)

As beaten solvent-spun cellulose fibers, 70% by mass of lyocell fibers having an average fiber diameter of 10.8 µm, and as synthetic fibers, 30% by mass of polypropylene fibers(hereinafter referred to as PP fibers) having an average fiber diameter of 7.9 µm were mixed and subjected to Fourdrinier papermaking, to obtain a separator having a thickness of 68.7 µm and a density of 0.26 g/cm³.

The fiber diameter difference between the lyocell fibers and the PP fibers of this separator was 2.9 µm. In addition, the Bekk smoothness was 22.9 seconds for the smooth surface and 21.8 seconds for the rough surface, and the air resistance was 2.2 seconds/100 ml.

Using this separator, each electrochemical element of Example 3 was produced.

### (Example 4)

As beaten solvent-spun cellulose fibers, 70% by mass of lyocell fibers having an average fiber diameter of 9.9 µm, and as synthetic fibers, 30% by mass of PP fibers having an average fiber diameter of 7.7 µm were mixed and subjected to Fourdrinier papermaking, to obtain a separator having a thickness of 64.5 µm and a density of 0.31 g/cm³.

The fiber diameter difference between the lyocell fibers and the PP fibers of this separator was 2.2 µm. In addition, the Bekk smoothness was 36.3 seconds for the smooth surface and 31.8 seconds for the rough surface, and the air resistance was 3.1 seconds/100 ml.

Using this separator, each electrochemical element of Example 4 was produced.

### (Example 5)

As beaten solvent-spun cellulose fibers, 85% by mass of lyocell fibers having an average fiber diameter of 5.1 µm, and as synthetic fibers, 15% by mass of acrylic fibers having an average fiber diameter of 3.2 µm were mixed and subjected to Fourdrinier papermaking, to obtain a separator having a thickness of 19.6 µm and a density of 0.55 g/cm³.

The fiber diameter difference between the lyocell fibers and the acrylic fibers of this separator was 1.9 µm. In addition, the Bekk smoothness was 199.9 seconds for the smooth surface and 187.0 seconds for the rough surface, and the air resistance was 19.8 seconds/100 ml.

Using this separator, each electrochemical element of Example 5 was produced.

### (Example 6)

As beaten solvent-spun cellulose fibers, 85% by mass of lyocell fibers having an average fiber diameter of 6.3 µm, and as synthetic fibers, 15% by mass of acrylic fibers having an average fiber diameter of 3.5 µm were mixed and subjected to Fourdrinier papermaking, to obtain a separator having a thickness of 30.2 µm and a density of 0.49 g/cm³.

The fiber diameter difference between the lyocell fibers and the acrylic fibers of this separator was 2.8 µm. In addition, the Bekk smoothness was 155.5 seconds for the smooth surface and 150.3 seconds for the rough surface, and the air resistance was 14.6 seconds/100 ml.

Using this separator, each electrochemical element of Example 6 was produced.

### (Example 7)

As beaten solvent-spun cellulose fibers, 85% by mass of lyocell fibers having an average fiber diameter of 7.5 µm, and as synthetic fibers, 15% by mass of PET fibers having an average fiber diameter of 4.9 µm were mixed and subjected to Fourdrinier papermaking, to obtain a separator having a thickness of 35.4 µm and a density of 0.46 g/cm³.

The fiber diameter difference between the lyocell fibers and the PET fibers of this separator was 2.6 µm. In addition, the Bekk smoothness was 97.3 seconds for the smooth surface and 96.4 seconds for the rough surface, and the air resistance was 10.9 seconds/100 ml.

Using this separator, each electrochemical element of Example 7 was produced.

### (Example 8)

As beaten solvent-spun cellulose fibers, 80% by mass of lyocell fibers having an average fiber diameter of 6.9 µm, and as synthetic fibers, 20% by mass of PET fibers having an average fiber diameter of 5.4 µm were mixed and subjected to Fourdrinier papermaking, to obtain a separator having a thickness of 29.8 µm and a density of 0.41 g/cm³.

The fiber diameter difference between the lyocell fibers and the PET fibers of this separator was 1.5 µm. In addition, the Bekk smoothness was 53.2 seconds for the smooth surface and 48.1 seconds for the rough surface, and the air resistance was 5.3 seconds/100 ml.

Using this separator, each electrochemical element of Example 8 was produced.

### (Comparative Example 1)

As beaten solvent-spun cellulose fibers, 95% by mass of lyocell fibers having an average fiber diameter of 1.6 µm, and as synthetic fibers, 5% by mass of PET fibers having an average fiber diameter of 1.7 µm were mixed and subjected to Fourdrinier papermaking, to obtain a separator having a thickness of 8.1 µm and a density of 0.75 g/cm³.

The fiber diameter difference between the lyocell fibers and the PET fibers of this separator was -0.1 µm. In addition, the Bekk smoothness was 458.0 seconds for the smooth surface and 430.6 seconds for the rough surface, and the air resistance was 52.4 seconds/100 ml.

Using this separator, each electrochemical element of Comparative Example 1 was produced.

### (Comparative Example 2)

As beaten solvent-spun cellulose fibers, 70% by mass of lyocell fibers having an average fiber diameter of 11.3 µm, and as synthetic fibers, 30% by mass of PET fibers having an average fiber diameter of 8.4 µm were mixed and subjected to Fourdrinier papermaking, to obtain a separator having a thickness of 74.7 µm and a density of 0.23 g/cm³.

The fiber diameter difference between the lyocell fibers and the PET fibers of this separator was 2.9 µm. In addition, the Bekk smoothness was 11.1 seconds for the smooth surface and 8.1 seconds for the rough surface, and the air resistance was 1.5 seconds/100 ml.

Using this separator, each electrochemical element of Comparative Example 2 was produced.

### (Comparative Example 3)

As beaten solvent-spun cellulose fibers, 65% by mass of lyocell fibers having an average fiber diameter of 10.7 µm, and as synthetic fibers, 35% by mass of PET fibers having an average fiber diameter of 7.8 µm were mixed and subjected to Fourdrinier papermaking, to obtain a separator having a thickness of 75.1 µm and a density of 0.20 g/cm³.

The fiber diameter difference between the lyocell fibers and the PET fibers of this separator was 2.9 µm. In addition, the Bekk smoothness was 9.7 seconds for the smooth surface and 8.4 seconds for the rough surface, and the air resistance was 1.2 seconds/100 ml.

Using this separator, each electrochemical element of Comparative Example 3 was produced.

### (Comparative Example 4)

As beaten solvent-spun cellulose fibers, 85% by mass of lyocell fibers having an average fiber diameter of 6.3 µm, and as synthetic fibers, 15% by mass of PET fibers having an average fiber diameter of 7.5 µm were mixed and subjected to Fourdrinier papermaking, to obtain a separator having a thickness of 40.5 µm and a density of 0.24 g/cm³.

The fiber diameter difference between the lyocell fibers and the PET fibers of this separator was -1.2 µm. In addition, the Bekk smoothness was 18.8 seconds for the smooth surface and 15.1 seconds for the rough surface, and the air resistance was 1.8 seconds/100 ml.

Using this separator, each electrochemical element of Comparative Example 4 was produced.

### (Conventional Example 1)

As beaten solvent-spun cellulose fibers, 100% by mass of lyocell fibers having an average fiber diameter of 8.0 µm was subjected to Fourdrinier papermaking, to obtain a separator having a thickness of 30.1 µm and a density of 0.41 g/cm³.

The Bekk smoothness of this separator was 102.5 seconds for the smooth surface and 91.2 seconds for the rough surface, and the air resistance was 10.3 seconds/100 ml.

Using this separator, each electrochemical element of Conventional Example 1 was produced.

### (Conventional Example 2)

As beaten solvent-spun cellulose fibers, 75% by mass of lyocell fibers having an average fiber diameter of 6.9 µm, and as synthetic fibers, 25% by mass of PET fibers having an average fiber diameter of 3.7 µm were mixed and subjected to Fourdrinier papermaking, to obtain a separator having a thickness of 30.4 µm and a density of 0.45 g/cm³.

The fiber diameter difference between the lyocell fibers and the PET fibers of this separator was 3.2 µm. In addition, the Bekk smoothness was 516.0 seconds for the smooth surface and 247.7 seconds for the rough surface, and the air resistance was 14.7 seconds/100 ml.

Using this separator, each electrochemical element of Conventional Example 2 was produced.

### (Conventional Example 3)

The separator of Example 6 was pressure-adjusted using a soft calender to obtain a separator having a thickness of 25.1 µm and a density of 0.59 g/cm³.

The Bekk smoothness of this separator was 633.4 seconds for the smooth surface and 625.5 seconds for the rough surface, and the air resistance was 20.0 seconds/100 ml.

Using this separator, each electrochemical element of Conventional Example 3 was produced.

### (Conventional Example 4)

A microporous polyethylene membrane having a thickness of 29.9 µm and a density of 0.53 g/cm³ was used as a separator.

Since this separator is not a separator composed of fibers, the fiber diameter cannot be measured. The air resistance of the separator was 301.0 seconds/100 ml, and the Bekk smoothness was 10,000 seconds or more for both the smooth surface and the rough surface.

The evaluation results of the separators of Examples, Comparative Examples, and Conventional Examples are shown in Table 1.

In addition, the evaluation results of the electrochemical element produced using the seperetor of each example are shown in Table 2.

**[Table 1]**

| | Separator | | | | | | | | |
|---|---|---|---|---|---|---|---|---|---|
| | Fiber content | Fiber diameter of lyocell | Fiber diameter of synthetic fiber | Fiber diameter difference | Thickness | Density | Bekk smoothness | | Air resistance |
| | | | | | | | Smooth surface | Rough surface | |
| | % | *µ*m | *µ*m | *µ*m | *µ*m | g/cm³ | Seconds | | Seconds/100 ml |
| Example 1 | Lyocell 95 PET 5 | 2.1 | 3.0 | -0.9 | 10.3 | 0.69 | 397.1 | 395.0 | 49.6 |
| Example 2 | Lyocell 95 PET 5 | 3.0 | 2.2 | 0.8 | 15.0 | 0.64 | 298.2 | 286.3 | 30.0 |
| Example 3 | Lyocell 70 PP 30 | 10.8 | 7.9 | 2.9 | 68.7 | 0.26 | 22.9 | 21.8 | 2.2 |
| Example 4 | Lyocell 70 PP 30 | 9.9 | 7.7 | 2.2 | 64.5 | 0.31 | 36.3 | 31.8 | 3.1 |
| Example 5 | Lyocell 85 Acryl 15 | 5.1 | 3.2 | 1.9 | 19.6 | 0.55 | 199.9 | 187.0 | 19.8 |
| Example 6 | Lyocell 85 Acryl 15 | 6.3 | 3.5 | 2.8 | 30.2 | 0.49 | 155.5 | 150.3 | 14.6 |
| Example 7 | Lyocell 85 PET 15 | 7.5 | 4.9 | 2.6 | 35.4 | 0.46 | 97.3 | 96.4 | 10.9 |
| Example 8 | Lyocell 80 PET 20 | 6.9 | 5.4 | 1.5 | 29.8 | 0.41 | 53.2 | 48.1 | 5.3 |
| Comparative Example 1 | Lyocell 95 PET 5 | 1.6 | 1.7 | -0.1 | 8.1 | 0.75 | 458.0 | 430.6 | 52.4 |
| Comparative Example 2 | Lyocell 70 PET 30 | 11.3 | 8.4 | 2.9 | 74.7 | 0.23 | 11.1 | 8.1 | 1.5 |
| Comparative Example 3 | Lyocell 65 PET 35 | 10.7 | 7.8 | 2.9 | 75.1 | 0.20 | 9.7 | 8.4 | 1.2 |
| Comparative Example 4 | Lyocell 85 PET 15 | 6.3 | 7.5 | -1.2 | 40.5 | 0.24 | 18.8 | 15.1 | 1.8 |
| Conventional Example 1 | Lyocell 100 | 8.0 | - | - | 30.1 | 0.41 | 102.5 | 91.2 | 10.3 |
| Conventional Example 2 | Lyocell 75 PET 25 | 6.9 | 3.7 | 3.2 | 30.4 | 0.45 | 516.0 | 247.7 | 14.7 |
| Conventional Example 3 | Lyocell 85 Acryl 15 | 6.3 | 3.5 | 2.8 | 25.1 | 0.59 | 633.4 | 625.5 | 20.0 |
| Conventional Example 4 | PE 100 | - | - | - | 29.9 | 0.53 | >10000 | >10000 | 301.0 |

**[Table 2]**

| | Electric double-layer capacitor | | | | | Lithium-ion capacitor | | | | | Lithium-ion secondary battery | | | | |
|---|---|---|---|---|---|---|---|---|---|---|---|---|---|---|---|
| | Impregnation properties | Capacitance | Internal resistance | Short-circuit defect rate | Capacity retention rate | Impregnation properties | Capacitance | Internal resistance | Short-circuit defect rate | Capacity retention rate | Impregnation properties | Discharge capacity | Internal resistance | Short-circuit defect rate | Capacity retention rate |
| | - | F | mΩ | % | % | - | F | mΩ | % | % | - | mAh | mΩ | % | % |
| Example 1 | ○ | 3011 | 0.39 | 0 | 71 | ○ | 2024 | 2.3 | 0 | 73 | ○ | 3020 | 48 | 0 | 70 |
| Example 2 | ○ | 3005 | 0.30 | 0 | 76 | ○ | 2021 | 1.9 | 0 | 79 | ○ | 3024 | 40 | 0 | 76 |
| Example 3 | ○ | 3001 | 0.37 | 0 | 73 | ○ | 2008 | 2.2 | 0 | 75 | ○ | 3011 | 45 | 0 | 72 |
| Example 4 | ○ | 3017 | 0.31 | 0 | 74 | ○ | 2017 | 2.0 | 0 | 77 | ○ | 3026 | 42 | 0 | 75 |
| Example 5 | ○ | 3010 | 0.25 | 0 | 79 | ○ | 2006 | 1.8 | 0 | 83 | ○ | 3017 | 38 | 0 | 80 |
| Example 6 | ○ | 3010 | 0.23 | 0 | 80 | ○ | 2011 | 1.5 | 0 | 86 | ○ | 3019 | 36 | 0 | 83 |
| Example 7 | ○ | 3007 | 0.22 | 0 | 82 | ○ | 2008 | 1.2 | 0 | 89 | ○ | 3007 | 33 | 0 | 85 |
| Example 8 | ○ | 3014 | 0.20 | 0 | 84 | ○ | 2005 | 1.0 | 0 | 90 | ○ | 3011 | 31 | 0 | 88 |
| Comparative Example 1 | Δ | 2896 | 0.51 | 0.9 | 50 | Δ | 1944 | 3.8 | 0.8 | 53 | Δ | 2935 | 64 | 0.5 | 55 |
| Comparative Example 2 | ○ | 3014 | 0.43 | 2.3 | 64 | ○ | 2003 | 2.7 | 1.1 | 67 | ○ | 3015 | 56 | 1.3 | 63 |
| Comparative Example 3 | ○ | 3006 | 0.45 | 3.1 | 62 | ○ | 2006 | 2.9 | 1.9 | 64 | ○ | 3001 | 59 | 1.5 | 60 |
| Comparative Example 4 | ○ | 3000 | 0.24 | 3.8 | 59 | ○ | 2001 | 1.8 | 2.3 | 58 | ○ | 3005 | 39 | 2.1 | 56 |
| Conventional Example 1 | ○ | 3012 | 0.21 | 0 | 61 | ○ | 2007 | 1.1 | 0 | 66 | ○ | 3000 | 32 | 0 | 65 |
| Conventional Example 2 | × | 2711 | 0.55 | 0 | 45 | × | 1803 | 4.0 | 0 | 47 | × | 2797 | 70 | 0 | 50 |
| Conventional Example 3 | × | 2584 | 0.61 | 0 | 39 | × | 1738 | 4.4 | 0 | 40 | × | 2731 | 82 | 0 | 44 |
| Conventional Example 4 | × | <100 | - | - | - | × | <100 | - | - | - | × | 500 | - | - | - |

As can be seen from Table 2, in the electrochemical elements of Examples, no short-circuit defect occurred.

In addition, the impregnation properties are evaluated as "○" in all cases, and the capacitance and discharge capacity of the electrochemical elements achieved the target capacities. Furthermore, the capacity retention rate in the long-term reliability test is also favorable at 70% or more.

The separator of Comparative Example 1 has a thickness of 8.1 µm. Furthermore, short-circuit defects occurred in the electrochemical elements using this separator.

In addition, since the separator is composed of fine fibers such as lyocell fibers having an average fiber diameter of 1.6 µm and PET fibers having an average fiber diameter of 1.7 µm, and has a density of 0.75 g/cm³ and an air resistance of 52.4 seconds/100 ml, which indicates excessively high denseness, the internal resistance of the electrochemical element is high.

Furthermore, the Bekk smoothness was 458.0 seconds for the smooth surface and 430.6 seconds for the rough surface, and the denseness in the surface direction is also high. Therefore, the impregnation properties are evaluated as "△", the internal resistance of the electrochemical element deteriorates, resulting in decreases in the capacitance, the discharge capacity, and the capacity retention rate in the long-term reliability test.

The separator of Comparative Example 2 has a thickness of 74.7 µm. Since the thickness is large, the internal resistance of the electrochemical element is high.

Since the Bekk smoothness of the separator is as low as 11.1 seconds for the smooth surface and 8.1 seconds for the rough surface, the impregnation properties are favorable; however, because the separator is composed of thick fibers such as lyocell fibers having an average fiber diameter of 11.3 µm and PET fibers having an average fiber diameter of 8.4 µm, the density is as low as 0.23 g/cm³ and the air resistance is as low as 1.5 seconds/100 ml despite the large thickness, and short-circuit defects occur.

From the comparison between Comparative Example 1 and Comparative Example 2, and each Example, it can be seen that the thickness of the separator is preferably 10 to 70 µm. In addition, it can be seen that the density of the separator is preferably 0.25 to 0.70 g/cm³, the air resistance is 2 to 50 seconds/100 ml, and the Bekk smoothness of both surfaces of the separator is preferably 20 to 400 seconds.

In order to shorten the impregnation time for improving the productivity of the electrochemical element, a lower value of the Bekk smoothness is more preferable. In a comparison between Example 1 and Example 2, the smooth surface is 397.1 seconds and the rough surface is 395.0 seconds in Example 1, whereas the smooth surface is 298.2 seconds and the rough surface is 286.3 seconds in Example 2, which is lower in Example 2. In addition, the air resistance is 49.6 seconds/100 ml in Example 1, whereas it is 30.0 seconds/100 ml in Example 2, but there are no short-circuit defects, and it can be seen that Example 2 has lower internal resistance of the electrochemical element and favorable capacity retention rate after the long-term reliability test.

In addition, in a comparison between Example 3 and Example 4, the Bekk smoothness is 22.9 seconds for the smooth surface and 21.8 seconds for the rough surface in Example 3, and the Bekk smoothness is 36.3 seconds for the smooth surface and 31.8 seconds for the rough surface in Example 4. Although the impregnation properties are more advantageous in Example 3, in order to obtain a separator with low Bekk smoothness, it is necessary to increase the fiber diameters of the lyocell and PET fibers, and the separator of Example 3 is thus thicker. Therefore, the internal resistance of the electrochemical element is more preferable in Example 4.

From the comparison between Example 1 and Example 2, and between Example 3 and Example 4, it can be seen that the Bekk smoothness of both surfaces of the separator is more preferably 30 seconds to 300 seconds, and the air resistance is more preferably 3 seconds/100 ml to 30 seconds/100 ml.

The separator of Comparative Example 3 is a separator in which 65% by mass of lyocell fibers and 35% by mass of PET fibers are mixed. Since the density and air resistance are even lower than those of the separator of Comparative Example 2, the short-circuit defect rate of the electrochemical element is high despite the large thickness.

The separator of Conventional Example 1 is a separator consisting only of lyocell fibers.

From the comparison between Conventional Example 1 and each Example, it can be seen that by using the separator of the present invention containing synthetic fibers, the capacity retention rate after the long-term reliability test can be improved. This is considered to be because the chemical stability of the separator was improved by the synthetic fibers.

From this, it can be seen that the content of solvent-spun cellulose fibers is preferably 70% by mass to 95% by mass, and the content of synthetic fibers is preferably 5% by mass to 30% by mass.

The separator of Comparative Example 4 had a fiber diameter difference between the lyocell fibers and the PET fibers of -1.2 µm, and the density and air resistance were as low as 0.24 g/cm³ and 1.8 µm, respectively. This is because the PET fibers inhibited the fiber entanglement between the lyocell fibers, and detachment of the PET fibers from the separator occurred. In the electrochemical elements using the separator of Comparative Example 4, the short-circuit defect rate was high, and the capacity retention rate after the long-term reliability test was low.

In addition, the smooth surface of the Bekk smoothness of the separator of Conventional Example 2 is 516.0 seconds. Since the impregnation properties are low, the target capacity of the electrochemical element is not obtained.

This is because the fiber diameter difference between the lyocell fibers and the PET fibers of the separator of Conventional Example 2 is 3.2 µm, and uneven distribution of the fibers thus occurred, which increased the value of the Bekk smoothness of the smooth surface.

From the comparison between Comparative Example 4 and Conventional Example 2, and each Example, it can be seen that the fiber diameter difference between the solvent-spun cellulose fibers and the synthetic fibers is preferably -1.0 µm to 3.0 µm.

The separator of Conventional Example 3 has its thickness adjusted with a soft calender from the separator of Example 6, but the Bekk smoothness is 633.4 seconds for the smooth surface and 625.5 seconds for the rough surface, and the impregnation properties are even lower than those of the separator of Conventional Example 2, and the capacity of the electrochemical element is also low.

The separator of Conventional Example 4 is a film, and the impregnation properties of the material itself are thus inferior. Furthermore, the Bekk smoothness was 10,000 seconds or more on both surfaces, and with an impregnation time of 1 hour, the capacity of the electrochemical element was too much lower than the target. Therefore, other evaluations could not be performed.

As described above, the separator of the present invention is a separator for electrochemical elements interposed between a pair of electrodes, and capable of holding an electrolyte solution that contains an electrolyte, in which the separator is configured as a single-layer separator that is composed of a beaten solvent-spun cellulose fiber and a synthetic fiber, and the separator has a thickness of 10 to 70 µm, a density of 0.25 to 0.70 g/cm³, and a Bekk smoothness of 20 to 400 seconds on both surfaces.

By using the separator of the present invention, it is possible to improve electrolyte impregnation properties without impairing the resistance, short-circuit resistance, and acid resistance of the separator.

In addition, by using the separator of the present invention, it is possible to contribute to improvement in the productivity of the electrochemical element, higher capacity, and a reliability capable of withstanding long-term use under severe conditions.

As described above, examples of using the separator of the present embodiment for an electric double-layer capacitor, a lithium-ion capacitor, and a lithium-ion secondary battery have been described.

In the electrochemical element according to the present invention, the electrode material, the electrolyte solution material, other members, and the like are not particularly limited, and various materials can be used.

In addition, the separator for electrochemical elements of the present invention can be applied to electrochemical elements other than those described in the examples of the present embodiment, for example, electrochemical elements such as lithium primary batteries, sodium-ion secondary batteries, sodium-sulfur secondary batteries, magnesium-ion secondary batteries, and magnesium-sulfur secondary batteries.

## Claims

1. A separator for electrochemical elements, the separator being interposed between a pair of electrodes, and capable of holding an electrolyte solution that contains an electrolyte, wherein
the separator is configured as a single-layer separator that is composed of a beaten solvent-spun cellulose fiber and a synthetic fiber, and
the separator has a thickness of 10 to 70 µm, a density of 0.25 to 0.70 g/cm³, and a Bekk smoothness of 20 to 400 seconds on both surfaces.

2. The separator for electrochemical elements according to claim 1, wherein the separator has an air resistance of 2 to 50 seconds.

3. The separator for electrochemical elements according to claim 1, wherein the separator has a fiber diameter difference of -1.0 to 3.0 µm between the beaten solvent-spun cellulose fiber and the synthetic fiber.

4. The separator for electrochemical elements according to claim 1, wherein the synthetic fiber is one or more fibers selected from a polyester fiber, an acrylic fiber, and a polyolefin fiber.

5. An electrochemical element comprising the separator for electrochemical elements according to any one of claims 1 to 4.

6. The electrochemical element according to claim 5, wherein the electrochemical element is any one of an electric double-layer capacitor, a lithium-ion capacitor, and a lithium-ion secondary battery.
